# EUROPEAN PATENT SPECIFICATION

(11) **EP 3 306 391 B1**
(45) Date of publication and mention of the grant of the patent: **07.12.2022**
(21) Application number: 15893879.5
(22) Date of filing: 06.09.2015
(51) Int. Cl.: G03B 21/20, G02B 27/18, H04N 9/31, G02B 5/02, G02B 26/00, G02B 27/48, G03B 33/08

(54) **LASER LIGHT SOURCE AND PROJECTION DISPLAY DEVICE**
LASERLICHTQUELLE UND PROJEKTIONSANZEIGEVORRICHTUNG
SOURCE DE LUMIÈRE LASER ET DISPOSITIF D'AFFICHAGE DE PROJECTION

(30) Priority: 03.06.2015 CN 201510298364
(43) Date of publication of application: 11.04.2018
(73) Proprietor: Hisense Co., Ltd., Qingdao, Shandong 266071 (CN)
(72) Inventor: TIAN, Youliang, Qingdao Shandong 266071 (CN); LIU, Xianrong, Qingdao Shandong 266071 (CN); LI, Wei, Qingdao Shandong 266071 (CN)
(74) Representative: Casalonga
(86) International application number: PCT/CN2015/088942
(87) International publication number: WO 2016/192223

(56) References cited:
- CN-A- 102 681 320
- CN-A- 103 062 672
- CN-A- 103 792 635
- CN-A- 103 888 740
- CN-A- 103 969 935
- CN-A- 104 298 059
- CN-A- 104 298 059
- US-A1- 2012 182 529
- US-A1- 2014 232 992
- US-A1- 2014 232 992

## Description

### TECHNICAL FIELD

The present disclosure relates to the field of projection display, in particular to a laser light source and a projection display device.

### BACKGROUND

A laser light is a light source emitting monochromatic coherent beams, with high luminance and strong directionality. Owing to the numerous advantages, the laser light has been gradually applied as a light source in the technical field of projection display in recent years. However, because of the high coherence of the laser light, the speckle effect is inevitable. This phenomenon is especially obvious in the solutions in which a pure laser light is used as the light source, and it also exists in the solutions in which a laser light and a fluorescent light are used, as well as in the solutions in which a mixed light source of a laser light and a LED is used. The speckle refers to the spatial interference of the light after scattering when a coherent light source irradiates a rough object, and the spatial interference of the light is due to the same wavelength and the constant phase of the light. There will be some constructive spatial interference and some destructive spatial interference, the final result is that alternating light and shade granular spots will appear on the screen, namely, some unfocused spots will flash, it is easy to feel dizzy after watching for a long time, and it will undoubtedly result in a quality reduction of projected images and hence lower the user's experience of watching

CN 104298059 A discloses a laser light source and a projection display device, which realise the technical effect of improving the light-emitting efficiency of red light and further improving the overall brightness of the laser light source. The laser light source comprises an excitation light source, a fluorescent wheel, a colour filter wheel and a control unit; the fluorescent wheel comprises a reflection portion and a transmission portion capable of transmitting the excitation light; a phosphor capable of being excited by the excitation light to emit yellow light, and a phosphor capable of being excited by the excitation light to emit green light are attached on the surface of the reflection portion; the colour filter wheel includes a transparent portion, a red colour filter portion, and a green colour filter portion; the control unit controls the fluorescent wheel to rotate synchronously with the colour filter wheel, so as to maintain the transparent portion of the colour filter wheel corresponding to the transmission portion and a part of the phosphor being excited by the excitation light to emit yellow light, and the red colour filter portion of the colour filter wheel corresponding to a remaining part of the phosphor being excited by the excitation light to emit yellow light, and the green colour filter portion of the colour filter wheel corresponding to the phosphor being excited by the excitation light to emit green light.

US 2012/0182529 A1 discloses a projector including a light source which emits laser light; a first diffusing section which diffuses the laser light emitted from the light source to emit a first diffused light; and a light modulation device which modulates the first diffused light emitted from the first diffusing section. The light modulation device includes a second diffusing section which diffuses the first diffused light emitted from the first diffusing section to emit a second diffused light, and diffusion intensity of the second diffused light emitted from the second diffusing section is distributed consecutively around a central axis of the second diffused light.

How to reduce the speckle effect of laser light caused by its inherent qualities at the same time as applying one or multiple laser light sources has become a technical problem to be solved.

### SUMMARY

The disclosure provides a laser light source and a projection display device, the speckles of the laser light are dissipated by arranging a fixed diffusion element and a rotary diffusion element in the optical path of the laser light source, so as to weaken the speckle effect, and it solves the technical problem in the prior art that the image quality is lowered by the speckle effect brought by using the laser light source.

A laser light source is defined in appended claim 1. Preferred embodiments are defined in the dependent claims.

A projection display is defined in appended claim 13.

For the technical solution of the disclosure, before reaching the fluorescence wheel, the laser light emitted by the laser device is first transmitted through a first diffusion element, and the first diffusion element is fixedly arranged to realize the first diffusion of the laser light; after the laser light and the fluorescent light are merged by a light merging component and before being output through the color filter wheel, a second diffusion element is also arranged and controlled to rotate to realize the second diffusion of the laser light, so that it can better destroy the coherence of the laser light and effectively weaken the speckle effect. In the technical solution of the disclosure, when the laser light emitted by the laser device is first transmitted through the first diffusion element, the fixedly arranged diffusion element can increase the spatial phases of the laser beam, and accordingly destroy the constant phase which is the condition for producing interference to a certain extent. When the laser light and the fluorescent light after being merged by the light merging component are again transmitted through the moving second diffusion element, then the moving diffusion element itself can produce some random spatial phases for the laser beam compared with the fixedly arranged diffusion element, and accordingly it can effectively destroy the coherence of laser light; in the technical solution of the disclosure, the moving diffusion element can further produce more random phases on the basis of the spatial phases produced by the fixed diffusion element by matching the fixed diffusion element with the moving diffusion element, so that the degree of decoherence for the original laser beam will be higher, more independent speckle patterns can be formed on the projected image, and the more independent speckle patterns there are, the weaker the phenomenon of light and shade spots will be by using the integral action of human eyes, and accordingly the speckle effect of laser light can be effectively weakened.

And, in the technical solution of the disclosure, the first diffusion element is arranged before the laser light is incident on the fluorescence wheel and the second diffusion element is arranged before the merged light is filtered and output from the filter, and both the first diffusion element and the second diffusion element are in the only optical path of the laser light, as a result, it is applicable for both the optical path of a monochromatic laser light source and the optical path of a bicolor laser light source, and thus the design of a speckle dissipating optical path has universality.

And, the technical solution of the disclosure can realize the effective speckle dissipation for a monochromatic or bicolor laser light source by using a two-diffusion-plate structure composed of a fixedly arranged diffusion element and a moving diffusion element, and it has a simple structure and a low complexity of optical architecture.

The technical solution of the disclosure also provides a projection display device. The projection display device comprises a laser light source, a light machine, a lens and a projection screen. The laser light source provides illumination for the light machine, and images are projected to the projection screen by the lens for displaying. Since the laser light source uses a fixedly arranged diffusion element matched with a moving diffusion element to jointly realize the speckle dissipation for the laser light, the moving diffusion element can further produce more random phases on the basis of the spatial phases produced by the fixed diffusion element, so that the degree of decoherence for the original laser beam will be higher, the more independent speckle patterns can be formed on the projected image, the weaker the speckle effect will be by using the integral action of human eyes, and accordingly the speckle effect of laser light can be effectively weakened.

In the projection display device provided by the technical solution of the disclosure, the laser light source can realize the effective speckle dissipation for laser light by using two diffusion elements, it has a simple structure and a low complexity of optical architecture, it is favorable for the miniaturized design of the optical system, and at the same time, it also provides conditions for the miniaturized design of projection devices.

### BRIEF DESCRIPTION OF THE DRAWINGS

Figure 1 is the schematic diagram of the laser light source in Embodiment 1 of the disclosure;
Figure 2 is the schematic diagram of the plan view of the fluorescence wheel in Embodiment 1 of the disclosure;
Figure 3 is the schematic diagram of the beam shaping device in Embodiment 1 of the disclosure;
Figure 4 is the schematic diagram of the second diffusion element in Embodiment 1 of the disclosure;
Figure 5 is the schematic diagram of the plan view of the color filter wheel in Embodiment 1 of the disclosure;
Figure 6 is the schematic diagram of the laser light source in Embodiment 2 of the disclosure;
Figure 7 is the second schematic diagram of the second diffusion element in Embodiment 2 of the disclosure;
Figure 8 is the structural diagram of the projection display device in Embodiment 3 of the disclosure.

### DETAILED DESCRIPTION

In order to make the objectives, technical solutions and advantages of the disclosure clearer, the disclosure will be further described in detail below by combining with the drawings. And obviously, the embodiments described are only partial embodiments of the disclosure but not all the embodiments.

### Embodiment 1

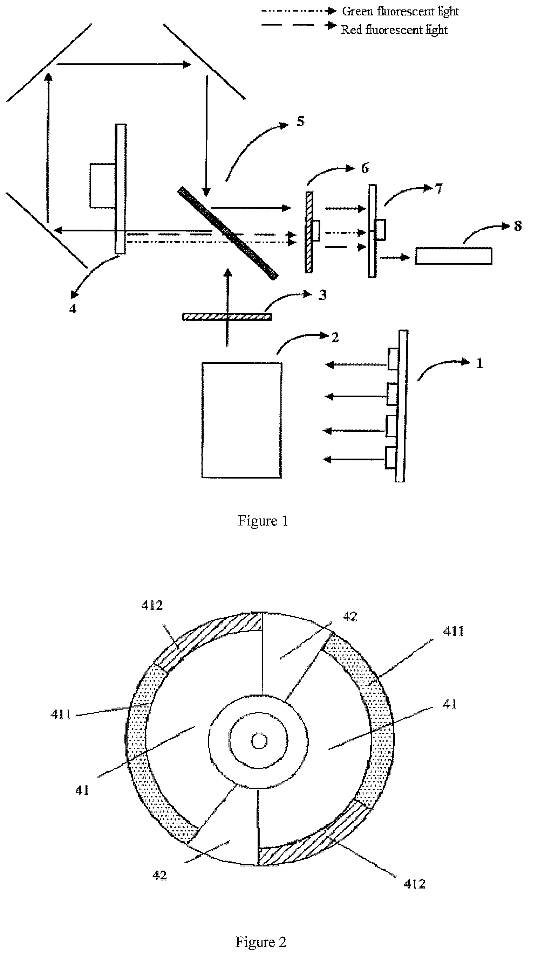

The embodiment of the disclosure provides a laser light source. As shown in Figure 1, the laser light source comprises a laser device 1, a fluorescence wheel 4 and a color filter wheel 7. A first diffusion element 3 is fixedly arranged in the optical path before the laser light is incident on the fluorescence wheel 4, so that the laser light emitted by the laser device 1 is transmitted through the first diffusion element before reaching the fluorescence wheel 4. The laser light merges with the fluorescent light emitted by the fluorescence wheel being excited by the laser light to form white light, and before the merged light is filtered and output through the color filter wheel 7 it is also transmitted through a second diffusion element 6, and the second diffusion element 6 is controlled to rotate. The first diffusion element may be a diffusion plate.

Specifically, the laser device 1 is a blue laser device and can be arranged in a set or multiple sets of arrays. In order to form the white light, a wavelength converter is also required to produce light of other wavelengths or other colors. In the embodiment of the disclosure, the fluorescence wheel serves as the wavelength converter, and the incident surface of the fluorescence wheel is coated with green fluorescent powder and red fluorescent powder, respectively. The green fluorescent powder and the red fluorescent powder can be excited by the blue laser light to emit green fluorescent light and red fluorescent light, respectively. As shown in Figure 2, the fluorescence wheel 4 comprises a reflection part 41 and a transmission part 42, and the transmission part is used for transmitting the blue laser light. The reflection part comprises a green fluorescent powder zone 411 and a red fluorescent powder zone 412.

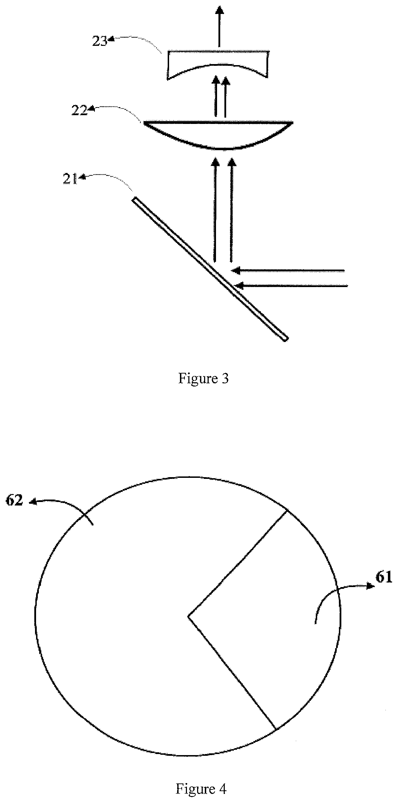

The laser light spot emitted by the laser device may have uneven luminance and too big beam area, hence the beam shaping of reflection, refraction, etc. for the laser light is requred to reduce the beam area and homogenize the beam energy before the laser light is transmitted through the fluorescence wheel, so as to achieve better efficiency of exciting the fluorescence wheel and emitting fluorescent light. In Embodiment 1 of the disclosure, an optical system 2 and the first diffusion element 3 form a beam shaping device and jointly complete the beam shaping for the blue laser light. The optical system 2 is as shown in Figure 3, which comprises a reflector 21, a convex lens 22 and a concave lens 23. The first diffusion element 3 is fixedly arranged behind the concave lens. The convex lens 22 and the concave lens 23 form a telescope system.

The reflector 21 can be a Fresnel lens or a reflector set to play a role in reducing beam separation and combining beams for the laser light. Preferably, before reaching the reflector, the blue laser light emitted by the laser device also passes a collimating lens (not shown in the figure) for collimation to reduce the angle of diffusion of the laser light, so that more light can reach the reflector unit to improve the shaping efficiency of the laser light.

After the beam combination by the reflector unit, the laser light passes through the telescope system. The telescope system is used for further beam reduction of the laser light, reducing the size of the light spot and improving the transmittance of the beam in the optical devices at the back. After passing through the telescope system and before being transmitted through the fluorescence wheel 4, the laser light also passes through a key component at the back of the beam shaping device -- the first diffusion element 3. The first diffusion element diffuses the laser light, on the one hand, it can increase the spatial phases for the blue laser beam and destroy the constant phase to a certain extent which is the condition for producing interference, which has a certain effect on speckle dissipation; on the other hand, the diffusion of the blue laser beam can also homogenize the beam energy, and the homogenized beam or light spot can avoid the surface of the fluorescence wheel being burned out and damaged by the laser beam with more centralized light intensity. When the laser light is directly incident on the surface of the fluorescence wheel under uneven intensity distribution and centralized energy, the burning out and the damaging will result in the fluorescence wheel being unable to normally emit the fluorescent light. To arrange the first diffusion element 3 at the back of the beam shaping device, it is considered that the laser beam has a small light spot area through bunching, thus it is favorable for transmitting into the optical system below through the optical lens, and at that time the diffusion efficiency of the laser beam can be improved. At the same time, in order to achieve the condition for exciting the fluorescence wheel when the laser light is incident on it, the last homogenization of the light spot must be performed for the uniform distribution of energy.

Specifically, the first diffusion element 3 can be completely coated with diffusers in uniform distribution. Frosted glass or binary components can be chosen, which can produce diffuse reflection of light and destroy the directionality of the laser light. The binary components may be diffraction elements with a flat plate shape which are used for altering the amplitudes and phases of the laser light.

The laser light after beam shaping reaches the fluorescence wheel 4. The fluorescence wheel 4 is with a rotating shaft and can be driven by a motor to rotate, and the transmission part 42 and the reflection part 41 will be alternately in the positions on which the excitation light is incident. Accordingly, when the laser light is incident on the surface of the fluorescence wheel, it can not only transmit the laser light, but can also be excited by the laser light to emit the fluorescent light. When the fluorescence wheel 4 rotates to the position of the reflection part 411, the blue laser light irradiates the green fluorescent powder to emit the green fluorescent light which is reflected by the surface of the fluorescence wheel 4 to reach a light merging component 5. When the fluorescence wheel 4 rotates to the position of the reflection part 412, the blue laser light irradiates the red fluorescent powder to emit the red fluorescent light which is also reflected by the surface of the fluorescence wheel 4 to reach the light merging component 5. When the fluorescence wheel rotates to the position of the transmission part 42, the transmission part can be transparent glass, the blue laser light will be transmitted through the transmission part 42 and then return to the light merging component 5 from the back of the fluorescence wheel 4 and through the loop of the blue laser light, and the loop of the blue laser light is usually composed of relay lenses and reflectors.

Preferably, a collimating lens set can be arranged on the front/back of the fluorescence wheel 4 and used for reducing the angles of diffusion of the transmitted laser light or the reflected fluorescent light and enhancing the degree of beam convergence.

In the embodiment of the disclosure, a dichroscope can be chosen as the light merging component 5, and it can transmit the fluorescent light and reflect the laser light from the fluorescence wheel. After the dichroscope, the transmitted fluorescent light and the reflected laser light can converge to the same optical path through a focusing lens set (not shown in the figure).

The laser light and the fluorescent light merge to form white light, before being filtered and output through the color filter wheel 7, the merged light is also transmitted through the second diffusion element 6. Specifically, the second diffusion element 6 is arranged in front of the color filter wheel, and it can also be controlled by a motor to rotate. As shown in Figure 4, the second diffusion element 6 comprises a diffusion part 61 for transmitting the blue laser light and a transparent part 62 for transmitting the green fluorescent light and the red fluorescent light. The diffusion part 61 is coated with diffusers, the diffusers can be either binary components or frosted glass, as long as they produce diffuse reflection of light, and the diffusers can be uniformly coated. The transparent part 62 is made of materials with high transmittance, such as transparent glass or fluorescence filters. The rotating diffusion element can produce more random spatial phases for the blue laser beam to destroy the coherence of the blue laser light accordingly, and it can effectively weaken the speckle effect. The second diffusion element may be a diffusion plate.

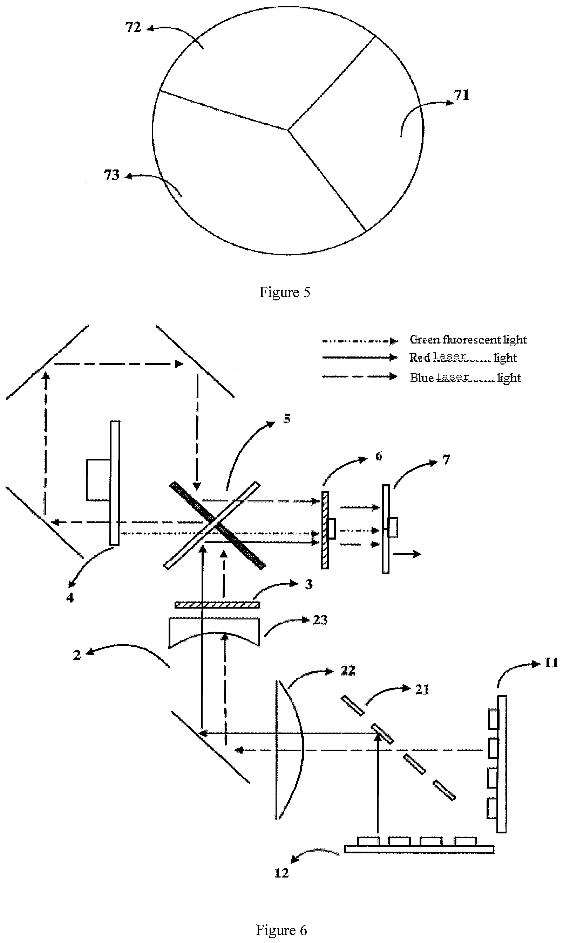

As shown in Figure 5, the color filter wheel 7 comprises a blue color filter plate 71, a green color filter plate 72 and a red color filter plate 73, which are used for filtering color of the blue laser light, the green fluorescent light and the red fluorescent light. After color filtering, the purity of color is improved, and the color expression will be better. The diffusion element 6 and the color filter wheel 7 keep in synchronous rotation with the fluorescence wheel 4, so that the fluorescence wheel can be ensured to output the light of one primary color at a time. The light of the primary color is then transmitted through the corresponding diffusion part or transparent part of the second diffusion element and the color filter plate of the corresponding color on the color filter wheel in order, so as to realize the color filter output in the correct time sequence.

Specifically, the sequential work process of the three components can be: when the blue laser device array 1 is lighted and when the blue laser light is incident on the reflection part 411 of the fluorescence wheel 4, the fluorescence wheel is excited to emit the green fluorescent light, at the moment the second diffusion element 6 rotates to the position of the transparent part 62, the color filter wheel 7 rotates to the position of the green color filter plate 72, and then green light as one of the three primary colors is output after being filtered through the color filter wheel. Similarly, when the blue laser light is incident on the red fluorescent powder in the reflection part 412 of the fluorescence wheel, the fluorescence wheel emits the red fluorescent light, at the moment the second diffusion element 6 also rotates to the position of the transparent part 62, the color filter wheel rotates to the position of the red color filter plate, and then red light as one of the three primary colors is output through the red color filter plate 73 of the color filter wheel. When the blue laser light passes through the transmission part 42 of the fluorescence wheel and is relayed by the optical path and output through the light merging component, at the moment the second diffusion element 6 rotates to the diffusion part 61, and the color filter wheel 7 rotates to the blue color filter plate 71 to output the blue light as one of the three primary colors. In this way, through the synchronous rotation, the three primary colors are sequentially output from the color filter wheel.

Preferably, for the more uniform synchronization of the second diffusion element 6 with the color filter wheel 7, the second diffusion element 6 and the color filter wheel 7 can be coaxially connected, the diffusion part 61 is opposite to the blue color filter plate 71, and in this way, the two components can be driven to rotate together using only one motor.

In the embodiment of the disclosure, the blue laser light emitted by the laser device first passes through the first diffusion element 3 in the beam shaping device 2, the first diffusion element 3 can increase the spatial phases of the laser light to play a certain role in diffusing and homogenizing the laser beam. After merging with the green and red fluorescent light, the blue laser light passes through the moving second diffusion element 6, and the moving diffusion element and the fixed diffusion element matched with each other have a better technical effect of speckle dissipation.

In terms of principle, when the laser light is transmitted through a fixed diffusion element, the fixedly arranged diffusion element can increase the spatial phases of the laser beam, and accordingly destroy the constant phase which is the condition for producing interference to a certain extent. When the laser light is transmitted through a moving diffusion element, the moving diffusion element has better diffusion of the laser beam, it can produce some random phases spatially to more effectively destroy the constant phase as the condition for interference, it creates some independent speckle patterns, by using the integral action of human eyes, the phenomenon of light and shade spots formed by the independent speckle patterns in the human brain will be weakened to weaken the speckle effect accordingly. But it can create the independent speckle patterns in a limited number.

In Embodiment 1 of the disclosure, the fixedly arranged first diffusion element 3 can increase the spatial phases of blue laser beam, and accordingly destroy the constant phase which is the condition for producing interference to a certain extent. When the blue laser light and the fluorescent light after being merged are transmitted through the moving second diffusion element 6, then the moving diffusion element itself can produce some random spatial phases for the laser beam compared with the fixedly arranged diffusion element, and accordingly it can effectively destroy the coherence of the laser light; in the embodiment of the disclosure, the moving diffusion element can further produce more random phases on the basis of the spatial phases produced by the fixed diffusion element by matching the fixed diffusion element with the moving diffusion element, so that the degree of decoherence for the original laser beam will be higher, more independent speckle patterns can be formed on the projected image, and the more independent speckle patterns there are, the weaker the phenomenon of light and shade spots will be by using the integral action of human eyes, and accordingly the speckle effect of the laser light can be effectively weakened.

To sum up, the speckle dissipating system formed by a fixedly arranged diffusion element and a moving diffusion element for the mixed laser light source formed by the blue laser light with the green fluorescent light and the red fluorescent light can effectively weaken the speckle effect of the laser light source and improve the display quality of projected images.

As the improvement for the solution of producing fluorescent light by the fluorescence wheel in Embodiment 1, the red fluorescent powder can be replaced by a yellow fluorescent powder, considering that more red fluorescent light is converted into invalid thermal energy in the process of excitation in practical application, the excitation efficiency for the red fluorescent light is lower, and the luminance of the entire light source is also affected. The fluorescence wheel can be excited to emit a yellow fluorescent light, the transparent part of the second diffusion element is used for transmitting the green and yellow fluorescent light, and it is necessary to add a red color filter plate, and a transparent part or a yellow color filter plate on the color filter wheel for filtering partial yellow fluorescent light to obtain the red fluorescent light and for transmitting or filtering partial yellow fluorescent light to obtain the yellow fluorescent light, so that on the one hand, such a color scheme improves the excitation efficiency of red fluorescent light and increases the luminance of the light source, on the other hand, it increases the primary color of yellow, and it can also expand the color gamut. However, the variation of the fluorescence wheel does not affect the speckle dissipating effect on the blue laser light in the entire light source scheme.

### Embodiment 2

In Embodiment 2 of the disclosure, the laser device is a bicolor laser device comprising a blue laser device and a red laser device, wherein the blue laser light and the red laser light share a speckle dissipating system composed of a fixedly arranged diffusion element and a moving diffusion element, so that the speckle effect of the blue and red laser lights can be weakened at the same time to achieve the speckle dissipating effect on the laser light source.

Specifically, as shown in Figure 6, the blue laser device array 11 for outputting the blue laser light is arranged perpendicular to the red laser device array 12 for outputting the red laser light, and the beams emitted by the perpendicularly arranged arrays are also perpendicular to each other. There is a gap at the corner between the two laser device arrays.

The laser light beams emitted by the laser devices shall also pass through a beam shaping device to further reduce their angles of diffusion, bunch the beams and form them into laser light spots in uniform distribution before being used for illumination.

In order to output the three primary colors, the fluorescence wheel 4 in the embodiment of the disclosure is in a similar structure to the fluorescence wheel in Embodiment 1, and it will not be repeated again. It is the same in that it also has a reflection part and a transmission part, and it is different in that the reflection part is only coated with one kind of fluorescent powder - green fluorescent powder and can be excited to emit green fluorescent light, and in the embodiment of the disclosure, the excitation light is the blue laser light.

It has been mentioned in Embodiment 1 that since the laser light emitted by the laser device is not in an ideal status and has the problems of uneven distribution of luminance and energy and bigger beam areas, in Embodiment 2, the red laser light and the blue laser light shall also pass through the beam shaping device for redirection, beam bunching, homogenization, etc.

Specifically, the beam shaping device 2 comprises a reflector unit 21, a convex lens 22, a concave lens 23, and a fixedly arranged first diffusion element 3 behind the concave lens. The convex lens 22 and the concave lens 23 form a telescope system. The beam shaping device performs, in order, shaping through reflection, beam bunching and homogenization of the blue laser light and the red laser light. The first diffusion element may be a diffusion plate.

The reflector unit 21 is arranged in front of the blue and the red laser device arrays and is arranged at an included angle of 45° with the two laser light arrays. The reflector unit 21 can be composed of a set of reflectors at intervals, the lens part of the reflectors can reflect light emitted from one light source, and the interval between the reflectors can allow light emitted from another light source to be transmitted. Accordingly, the reflection for one light source of the blue and the red laser light sources and the transmission for the other light source is achieved using only one reflector unit, so that it not only can reduce the beam separation of the beams output by the two laser light arrays and output the synthetic beam in the same direction, it can also achieve the objective of a compact structure.

Preferably, before reaching the reflector unit 21, the blue laser light and the red laser light also pass a collimating lens (not shown in the figure) for collimation to reduce the angle of diffusion for the blue laser light and the red laser light respectively, so that a greater quantity of light can reach or be transmitted through the reflector unit to improve the shaping efficiency of the laser light.

After beam combination by the reflector unit 21, the blue laser light and the red laser light pass through the telescope system composed of the convex lens 22 and the concave lens 23 in order, the action of the telescope set here is for further bunching the laser beam, reducing the size of the light spot or the beam area, and improving the transmittance of the beam in the optical devices at the back.

After passing the telescope system, the blue laser light and the red laser light will also pass through a key component at the back of the beam shaping device 2 -- the first diffusion element 3. No matter for the red laser light or the blue laser light, the first diffusion element will diffuse the laser beam. On the one hand, it can increase the spatial phases of the laser beam, and destroy the constant phase which is the condition for producing interference to a certain extent, which has a certain effect on speckle dissipation; on the other hand, the diffusion of the laser beam can also homogenize the beam energy, which is very important for the blue laser light, since the blue laser light serves as the excitation light of the fluorescence wheel. And if the blue laser beam is not homogenized, it may cause the surface of the fluorescence wheel to be burned out and damaged by the laser beam with more centralized light intensity. When the laser light is directly incident on the surface of the fluorescence wheel under uneven intensity distribution and centralized energy, the burning out and the damaging will result in the fluorescence wheel being unable to normally emit the fluorescent light.

Specifically, the first diffusion element 3 can be completely coated with diffusers in uniform distribution. Frosted glass or binary components can be chosen, which can produce diffuse reflection of light and destroy the directionality of the laser light. The binary components may be diffraction elements with a flat plate shape which are used for altering the amplitudes and phases of the laser light.

The laser light after beam shaping reaches the fluorescence wheel 4, similar to the structure and work process of the fluorescence wheel in Embodiment 1, when the fluorescence wheel 4 rotates to the position of the transmission part 42, the blue laser light is transmitted through the transmission part 42 and then returns to the light merging component 5 from the back of the fluorescence wheel 4 and through the loop of the blue laser light. When the fluorescence wheel 4 rotates to the position of the reflection part 41, the blue laser light irradiates the green fluorescent powder to emit a green fluorescent light which is reflected by the surface of the fluorescence wheel 4 to reach the light merging component 5.

Preferably, a collimating lens set can be arranged on the front/back of the fluorescence wheel 4 and used for reducing the angles of diffusion for the transmitted laser light or reflected fluorescent light and enhancing the degree of beam convergence.

The red laser light after beam shaping is transmitted through the first diffusion element and is then directly incident on the light merging component 5. And in Embodiment 2, the light merging component 5 can be an X light merging lens.

The X light merging lens is composed of two lenses crossly arranged in an "X" shape, which have the filtering effect of reflecting A and transmitting B or reflecting B and transmitting A, respectively. For example, a lens for reflecting red and transmitting green, or a lens for reflecting green and transmitting red and blue, and the high reflectance and high transmittance of light can be realized by reasonable coatings on the light merging lens and keeping the light away from the area with low transmittance in the center of the lens as much as possible in the design of the optical path.

In the embodiment of the disclosure, the X light merging lens 5 is composed of a lens for reflecting blue and transmitting red and green and a lens for reflecting red and transmitting blue and green, wherein, the lens for reflecting red and transmitting blue and green can reflect the red laser light and transmit the blue laser light, the transmitted blue laser light is then reflected by another lens for reflecting blue and transmitting red and green to the fluorescence wheel, finally it returns to the X light merging lens 5 after being relayed in a series of optical path redirections and then is reflected by the lens for reflecting blue and transmitting red and green in the X light merging lens 5. On the other hand, the emitted green fluorescent light is reflected by the fluorescence wheel to the X light merging lens 5 and is transmitted by both the lens for reflecting red and transmitting blue and green and the lens for reflecting blue and transmitting red and green of the X light merging lens 5. And the red laser light is first reflected by the lens for reflecting red and transmitting blue and green, then reaches the lens for reflecting blue and transmitting red and green and is transmitted through it. The transmission path of the three colors of light in the X light merging lens is as shown by the optical path of the merged light in Figure 6. Finally, the red laser light, the blue laser light and the green fluorescent light are all merged by the X light merging lens 5 to form the merged white light and are transmitted in the same direction.

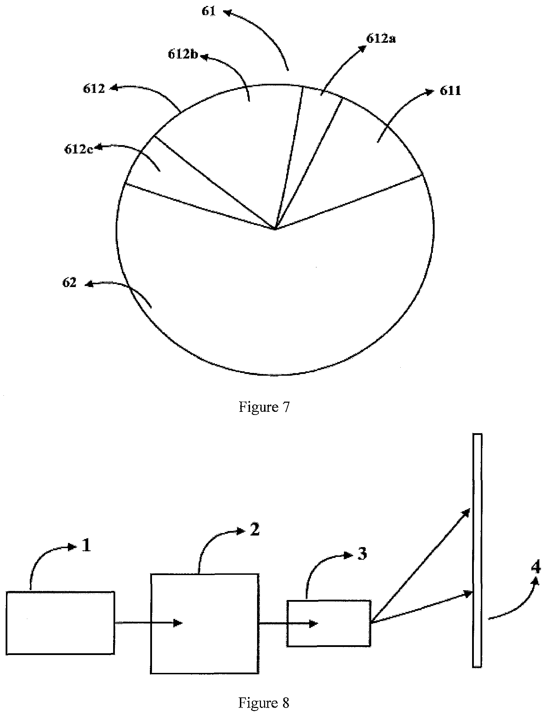

In the embodiment of the disclosure, a second diffusion element 6 is arranged in front of the color filter wheel 7 and behind the light merging component 5, and the second diffusion element can be controlled by a motor to rotate. The first diffusion element may be a diffusion plate. As shown in Figure 7, the second diffusion element 6 comprises a transparent part 62 for transmitting the green fluorescent light, and it is made of materials with high transmittance, such as transparent glass or fluorescence filters. The second diffusion element 6 also comprises a diffusion part 61, wherein the diffusion part 61 comprises a blue laser light diffusion part 611 and a red laser light diffusion part 612, which are used for diffusing the blue laser light and the red laser light, respectively. In order to realize diffuse reflection, the blue laser light diffusion part 611 and the red laser light diffusion part 612 are coated with diffusers, respectively. The diffusers can be either binary components or frosted glass that can play a better role of diffuse reflection of light, and the diffusers can be uniformly coated. The coated areas of the diffusers on the two diffusion parts are different, which correspond to the fan-shaped areas on the blue color filter plate and the red color filter plate of the color filter wheel 7 which is at the back, respectively, and are related with the proportion of each primary color in white balance. In Embodiment 2, the three central angles account for 15%, 25% and 60%, respectively. Specifically, the central angle of the blue laser light diffusion part 611 is 54°, the central angle of the red laser light diffusion part 612 is 90°, and the central angle of the transparent part is 216°.

At the same time, although the blue laser light and the red laser light have close coherence, owing to the different sensitivity of human eyes to the speckles formed by the red laser light and the blue laser light, the actual situation is that human eyes have higher sensitivity to the speckles formed by the red laser light, and thus more attention shall be paid to the speckle dissipation of the red laser light. The red laser light diffusion part 612 can comprise multiple diffusion subparts, the multiple diffusion subparts have different angles of diffusion for the red laser light. Among the multiple diffusion subparts, the angles of diffusion for the red laser light of the diffusion subparts in the middle can be greater than the angles of diffusion for the red laser light of the diffusion subparts on both sides, and the areas of the diffusion subparts in the middle are also bigger than the areas of the diffusion subparts on both sides; the reason for such an arrangement is that the energy distribution of the laser light is of the Gaussian type and is more centralized in the middle, as a result, the diffusion part closer to the middle requires a greater angle of diffusion and a bigger area proportion to effectively diverge and decohere the laser beam with more centralized energy.

As shown in Figure 7, the red laser light diffusion part is divided into 3 red laser light diffusion subparts, 612a, 612b and 612c, wherein, the fan-shaped central angle is 45° for 612b, 20° for 612a and 25° for 612c. The angle of diffusion for the diffuse reflector at 612b can be set as 5°~5.5°, the angle of diffusion for the diffuse reflector at 612a can be set as 2°~2 .5°, and the angle of diffusion for the diffuse reflector at 612c can be set as 2.5°~3°, the gradual arrangement due to such settings of the diffusion subparts of the red laser light diffusion part can realize the effective decoherence for the Gaussian beams of the laser light.

The above angle distributions for the red laser light diffusion part, the blue laser light diffusion part and the transparent part in the second diffusion element are only examples and are not limited to the above range of values, since the color proportions of R, G and B are related with the white balance required by the system. The white balance is an indicator for describing the accuracy of the white color obtained by merging the three primary colors of red, green and blue in a display device. The white balance will be affected by the factors of color temperature, ambient light, etc., and different white balances will display different image tones. Moreover, in the above embodiment, if the system has a serious speckling phenomenon, it is necessary to reduce the angle of the transparent part and increase the angle of the diffusion part, and a diffusion element having a big angle is used to weaken the speckling phenomenon.

The blue laser light, red laser light and green fluorescent light are transmitted through the color filter wheel 7 after diffusion and transmission through the second diffusion element, similar to that in Embodiment 1, the corresponding blue color filter plate, red color filter plate and green color filter plate are arranged on the color filter wheel 7, respectively to realize the sequential color filter output.

Similar to that in Embodiment 1, the second diffusion element 6 and the color filter wheel 7 keep in synchronous rotation with the fluorescence wheel 4, so that it can be ensured to output the light of one primary color at a time from the fluorescence wheel. The light of the primary color is transmitted through the corresponding diffusion part or transparent part of the second diffusion element and the color filter plate of the corresponding color on the color filter wheel in order, so as to realize the color filter output in the correct time sequence.

In this embodiment, the sequential work process of the speckle dissipation of the laser light is that:
according to the lighting sequence of the laser device, when the blue laser device is lighted, the blue laser light after beam shaping is transmitted through the first diffusion element 3 to realize the preliminary decoherence and homogenization, is reflected by the X light merging lens 5 to the fluorescence wheel 4, and is transmitted by the transmission part 42 of the fluorescence wheel when the fluorescence wheel 4 rotates to the position of the transmission part 42, then is relayed by the optical path of the relay loop to reach the X light merging lens 5 for reflection and output again. At that moment, the second diffusion element 6 rotates to the position of the blue laser light diffusion part 611, and the color filter wheel rotates to the position of the blue light filter plate, so that the blue laser light is diffused and homogenized by the blue laser light diffusion part and is then transmitted to the blue color filter plate to form the blue light.

When the fluorescence wheel 4 rotates to the reflection part 41, the blue laser light irradiates the green fluorescent powder in the circumference on the surface of the reflection part 41, and the emitted green fluorescent light is reflected by the fluorescence wheel and transmitted and output through the X light merging lens 5. At that moment, the second diffusion element 6 rotates to the position of the transparent part 62, and the color filter wheel 7 rotates to the position of the green light filter plate, so that the green fluorescent light is transmitted through the transparent part 62 of the second diffusion element 6 and passes through the green light filter plate to form the green light.

In a similar way, when the red laser device is lighted, the red laser light through the beam shaping device is transmitted through the first diffusion element 3 to realize the preliminary decoherence, it reaches the X light merging lens and is reflected by it. At that moment, the second diffusion element 6 rotates to the position of the red laser light diffusion part 612, the red laser light will pass through 612a, 612b and 612c in order according to the rotation of the red laser light diffusion part 612, so that the red laser light suffers another diffusion and decoherence. The color filter wheel 7 rotates to the position of the red color filter plate, so that the red laser light is transmitted through the red color filter plate after diffusion through the red laser light diffusion part to form the red light.

Preferably, for the more uniform synchronization of the second diffusion element 6 with the color filter wheel 7, the second diffusion element 6 and the color filter wheel 7 can be coaxially connected, the diffusion part 611 is opposite to the blue color filter plate 71, and in this way, the two components can be driven to rotate together using only one motor.

In the technical solution of Embodiment 2 in which a bicolor laser light source is provided, the blue laser light and red laser light emitted by the blue and red laser devices first pass through the fixedly arranged first diffusion element 3, which can increase the spatial phases of the blue laser beam or red laser beam and destroy the constant phase which is the condition for producing interference to a certain extent. After merging with the fluorescent light, the blue laser light and red laser light pass through the moving second diffusion element 6, then the moving diffusion element itself can produce some random spatial phases for the laser beam compared with the fixedly arranged diffusion element, and accordingly it can effectively destroy the coherence of the laser light; in the embodiment of the disclosure, the moving diffusion element can further produce more random phases on the basis of the spatial phases produced by the fixed diffusion element by matching the fixed diffusion element with the moving diffusion element, so that the degree of decoherence for the blue laser beam and red laser beam will be higher, more independent speckle patterns can be formed on the projected image, and the more independent speckle patterns there are, the weaker the phenomenon of light and shade spots will be by using the integral action of human eyes, and accordingly the speckle effect of the laser light can be effectively weakened to improve the display quality of projected images.

Besides, Embodiment 2 also divides the red laser light diffusion part in the second diffusion element 6 into multiple diffusion subparts according to the characteristic that human eyes are more sensitive to the speckles of the red laser light, and the diffusion subparts in the middle have both bigger areas and greater angles of diffusion for the red laser light than the diffusion subparts on both sides, so that the speckle dissipating effect of the diffusion subparts in the middle on the red laser light can be enhanced.

Moreover, in the embodiment of the disclosure, a speckle dissipating system is shared for the speckle dissipation of the blue laser light and the red laser light. The speckle dissipating system is composed of a fixedly arranged first diffusion element in the beam shaping device and a moving second diffusion element. Compared with the prior art, in which it is necessary to design the optical path of speckle dissipation for each wavelength of the laser light when a laser light source is used, the speckle dissipating solution in the embodiment of the disclosure has a utilization ratio of optical components and a high speckle dissipating efficiency.

At the same time, the optical path of speckle dissipation is not limited to one light source or multiple light sources, or to monochromatic laser light or bicolor laser light, and the optical path of speckle dissipation has universality. The first diffusion element may be a diffusion plate, and/or the second diffusion element may be a diffusion plate. Further, it should be noted that the first diffusion plate may comprise one or more first diffusion plates. There could be one first diffusion plate for a monochromatic laser device when the same is used, and there could be two first diffusion plates for each laser device when a laser device for one color and another laser device for another color are used. Also, in the case that a laser device for one color and another laser device for another color are used, there still could be one diffusion plate for the common use of the two laser devices. Moreover, the second diffusion plate may comprise one or more second diffusion plates.

### Embodiment 3

The embodiment of the disclosure provides a projection display device, as shown by the schematic diagram in Figure 8, the projection display device comprises a laser light source 1, a light machine 2, a lens 3 and a projection screen 4.

The laser light source adopts the laser light source in the above Embodiment 1 or 2, light sources mix to form the white light and sequentially output the three primary colors; the primary colors enter the light machine 2 part through an optical wand (not shown in the figure), in addition to the optical wand strucutre, the light machine 2 part also comprises an optical path converter and a DMD chip (both not shown in the figure). The DMD chip can be considered as being composed of numerous tiny reflectors, these tiny reflectors can turn over driven by current within a certain range of angle to regulate the quantity of light entering the lens, so that different colors can be displayed in the images. After being modulated by the DMD, the three primary colors of light reach the lens 3 by being refracted and converged multiple times.

The projection device in Embodiment 3 is a projection device with ultra-short focus, it is applicable for household or portable use. Thus the lens 3 is a projection lens with ultra-short focus, and the projection lens with ultra-short focus has the characteristic that it can still project high-quality images at a low projection ratio. After being modulated by the DMD, the light reaches the lens 3 and is refracted and reflected by a set of optical lenses including multiple convex lenses, concave lenses, non-spherical lenses, etc. arranged within the lens 3, and then is finally projected on the projection screen 4 to form projected images.

For the projection display device provided by the disclosure, the moving diffusion element can further produce more random phases on the basis of the spatial phases produced by the fixed diffusion element by matching a fixedly arranged diffusion element with a moving diffusion element of the laser light source part to jointly realize the speckle dissipation for laser light, so that the degree of decoherence for the original laser beam will be higher, more independent speckle patterns can be formed on the projected image, and the more independent speckle patterns there are, the weaker the speckle effect will be by using the integral action of human eyes, and accordingly the speckle effect of the laser light can be effectively weakened.

In the projection display device provided by the technical solution of the disclosure, the laser light source can realize the effective speckle dissipation for the laser light by using two diffusion elements, it has fewer optical devices, a simple structure and a low complexity of optical architecture, it is favorable for the miniaturized design of the optical system, and at the same time, it also provides conditions for the miniaturized design of projection devices.

Although the preferable embodiments of the disclosure have been described, the person skilled in the art can make other changes and modifications to these embodiments once they know the basic creative ideas.

Obviously, the person skilled in the art can make various changes and transformations of the disclosure without getting away from the scope of the disclosure. In this way, if these modifications and transformations of the disclosure are within the scope of the claims, the disclosure is also intended to contain these modifications and transformations.

## Claims

1. A laser light source, comprising:
a laser device (1), a fluorescence wheel (4) and a color filter wheel(7), wherein the fluorescence wheel (4) emits fluorescent light when excited by laser light;
a telescope system including a convex lens (22) and a concave lens (23);
a first diffusion element (3) downstream of the telescope system;
a light merging component (5); and
a second diffusion element (6) upstream of the color filter wheel (7);
wherein after passing through the telescope system and before reaching the fluorescence wheel (4), the laser light emitted by the laser device (1) is transmitted through the first diffusion element (3), and the first diffusion element (3) is fixedly arranged; and
wherein after passing through the first diffusion element (3), the laser light reaches the fluorescence wheel (4) such that the fluorescence wheel (4) is excited to emit the fluorescent light;
then both the laser light and the fluorescent light reach the light merging component (5) to be merged;
**characterised in that** the laser light and the fluorescent light are transmitted through the second diffusion element (6) after being merged by the light merging component (5) and before being output through the color filter wheel (7), and the second diffusion element (6) is controlled to rotate.

2. The laser light source according to claim 1, wherein the fluorescence wheel (4), the second diffusion element (6) and the color filter wheel (7) rotate synchronously.

3. The laser light source according to claim 1 or 2, wherein the first diffusion element (3) is coated with diffusers in uniform distribution.

4. The laser light source according to claim 1 or 3, wherein the second diffusion element (6) comprises a diffusion part (61) and a transparent part (62), the diffusion part (61) is coated with diffusers, and the transparent part (62) is made of materials with high transmittance.

5. The laser light source according to claim 4, wherein the laser device (1) is a monochromatic laser device emitting a blue laser light, the first diffusion element (3) is used for transmitting the blue laser light, and the diffusion part (61) of the second diffusion element (6) is used for transmitting the blue laser light.

6. The laser light source according to claim 4, wherein the laser device (1) is a bicolor laser device comprising a blue laser device and a red laser device, and the first diffusion element (3) is used for transmitting a blue laser light and a red laser light.

7. The laser light source according to claim 6, wherein the diffusion part (61) of the second diffusion element (6) comprises a blue laser light diffusion part (611) used for transmitting the blue laser light and a red laser light diffusion part (612) used for transmitting the red laser light.

8. The laser light source according to claim 7, wherein the red laser light diffusion part (612) comprises multiple diffusion subparts (612a, 612b, 612c), and the multiple diffusion subparts (612a, 612b, 612c) have different angles of diffusion for the red laser light.

9. The laser light source according to claim 8, wherein among the multiple diffusion subparts (612a, 612b, 612c), the angles of diffusion for the red laser light of the diffusion subparts (612b) in the middle are greater than the angles of diffusion for the red laser light of the diffusion subparts (612a, 612c) on both sides.

10. The laser light source according to claim 8 or 9, wherein among the multiple diffusion subparts (612a, 612b, 612c), the areas of the diffusion subparts in the middle (612b) are bigger than the areas of the diffusion subparts (612a, 612c) on both sides.

11. The laser light source according to claim 4, wherein the diffusers are frosted glass or binary components.

12. The laser light source according to any one of claims 1-11, wherein 2. the first diffusion element (3) is a diffusion plate, and/or the second diffusion element (6) is a diffusion plate.

13. A projection display device, comprising a laser light source (1), a light machine (2), a lens (3) and a projection screen (4), wherein the laser light source (1) provides illumination for the light machine (2), and images are projected to the projection screen (4) by the lens (3) for displaying, and wherein the laser light source (1) is any laser light source according to any one of claims 1-11.

## Patentansprüche

1. Laserlichtquelle, umfassend:
eine Laservorrichtung (1), eine Fluoreszenzscheibe (4) und eine Farbfilterscheibe (7), wobei die Fluoreszenzscheibe (4) Fluoreszenzlicht emittiert, wenn sie durch Laserlicht erregt wird;
ein Teleskopsystem, das eine konvexe Linse (22) und eine konkave Linse (23) aufweist;
ein erstes Streuelement (3), das dem Teleskopsystem nachgelagert ist;
eine Lichtzusammenführungskomponente (5); und
ein zweites Streuelement (6), das der Farbfilterscheibe (7) vorgelagert ist;
wobei das Laserlicht, das von der Laservorrichtung (1) emittiert wird, nachdem es sich durch das Teleskopsystem hindurchbewegt hat und bevor es die Fluoreszenzscheibe (4) erreicht, durch das erste Streuelement (3) hindurch übertragen wird, und wobei das erste Streuelement (3) ortsfest angeordnet ist; und
wobei das Laserlicht, nachdem es sich durch das erste Streuelement (3) hindurchbewegt hat, die Fluoreszenzscheibe (4) erreicht, sodass die Fluoreszenzscheibe (4) erregt wird, um das Fluoreszenzlicht zu emittieren;
wobei anschließend sowohl das Laserlicht als auch das Fluoreszenzlicht die Lichtzusammenführungskomponente (5) erreichen, um zusammengeführt zu werden;
**dadurch gekennzeichnet, dass** das Laserlicht und das Fluoreszenzlicht durch das zweite Streuelement (6) hindurch übertragen werden, nachdem sie durch die Lichtzusammenführungskomponente (5) zusammengeführt wurden und bevor sie durch die Farbfilterscheibe (7) hindurch ausgegeben werden, und das zweite Streuelement (6) so gesteuert wird, dass es sich dreht.

2. Laserlichtquelle nach Anspruch 1, wobei sich die Fluoreszenzscheibe (4), das zweite Streuelement (6) und die Farbfilterscheibe (7) synchron drehen.

3. Laserlichtquelle nach Anspruch 1 oder 2, wobei das erste Streuelement (3) mit Diffusoren in gleichmäßiger Verteilung beschichtet ist.

4. Laserlichtquelle nach Anspruch 1 oder 3, wobei das zweite Streuelement (6) einen Streuteil (61) und einen transparenten Teil (62) umfasst, wobei der Streuteil (61) mit Diffusoren beschichtet ist und der transparente Teil (62) aus Materialien mit hoher Lichtdurchlässigkeit besteht.

5. Laserlichtquelle nach Anspruch 4, wobei die Laservorrichtung (1) eine monochromatische Laservorrichtung ist, die ein blaues Laserlicht emittiert, das erste Streuelement (3) zur Übertragung des blauen Laserlichts verwendet wird und der Streuteil (61) des zweiten Streuelements (6) zur Übertragung des blauen Laserlichts verwendet wird.

6. Laserlichtquelle nach Anspruch 4, wobei die Laservorrichtung (1) eine Zweifarbenlaservorrichtung ist, die eine Blaulaservorrichtung und eine Rotlaservorrichtung umfasst, und das erste Streuelement (3) zur Übertragung eines blauen Laserlichts und eines roten Laserlichts verwendet wird.

7. Laserlichtquelle nach Anspruch 6, wobei der Streuteil (61) des zweiten Streuelements (6) einen Streuteil (611) für blaues Laserlicht, der zur Übertragung des blauen Laserlichts verwendet wird, und einen Streuteil (612) für rotes Laserlicht, der zur Übertragung des roten Laserlichts verwendet wird, umfasst.

8. Laserlichtquelle nach Anspruch 7, wobei der Streuteil (612) für rotes Laserlicht mehrere Streuunterteile (612a, 612b, 612c) umfasst und die mehreren Streuunterteile (612a, 612b, 612c) unterschiedliche Streuwinkel für das rote Laserlicht aufweisen.

9. Laserlichtquelle nach Anspruch 8, wobei, unter den mehreren Streuunterteilen (612a, 612b, 612c), die Streuwinkel für das rote Laserlicht der Streuunterteile (612b) in der Mitte größer als die Streuwinkel für das rote Laserlicht der Streuunterteile (612a, 612c) auf beiden Seiten sind.

10. Laserlichtquelle nach Anspruch 8 oder 9, wobei, unter den mehreren Streuunterteilen (612a, 612b, 612c), die Flächen der Streuunterteile in der Mitte (612b) größer als die Flächen der Streuunterteile (612a, 612c) auf beiden Seiten sind.

11. Laserlichtquelle nach Anspruch 4, wobei die Diffusoren Milchglas- oder Binärkomponenten sind.

12. Laserlichtquelle nach einem der Ansprüche 1-11, wobei das erste Streuelement (3) eine Streuplatte ist und/oder das zweite Streuelement (6) eine Streuplatte ist.

13. Projektionsanzeigevorrichtung, die eine Laserlichtquelle (1), eine Lichtmaschine (2), eine Linse (3) und einen Projektionsschirm (4) umfasst, wobei die Laserlichtquelle (1) eine Beleuchtung für die Lichtmaschine (2) bereitstellt und Bilder von der Linse (3) zur Anzeige auf den Projektionsschirm (4) projiziert werden, und wobei die Laserlichtquelle (1) eine beliebige Laserlichtquelle nach einem der Ansprüche 1-11 ist.

## Revendications

1. Source de lumière laser, comprenant :
un dispositif laser (1), une roue fluorescente (4) et une roue à filtres de couleur (7), dans laquelle la roue fluorescente (4) émet une lumière fluorescente lorsqu'elle est excitée par une lumière laser ;
un système télescopique comportant une lentille convexe (22) et une lentille concave (23) ;
un premier élément de diffusion (3) en aval du système télescopique ;
un composant de fusion de lumière (5) ; et
un deuxième élément de diffusion (6) en amont de la roue à filtres de couleur (7) ;
dans laquelle, après le passage à travers le système télescopique et avant d'atteindre la roue fluorescente (4), la lumière laser émise par le dispositif laser (1) est transmise à travers le premier élément de diffusion (3), et le premier élément de diffusion (3) est agencé fixement ; et
dans laquelle, après le passage à travers le premier élément de diffusion (3), la lumière laser atteint la roue fluorescente (4) de sorte que la roue fluorescente (4) soit excitée pour émettre la lumière fluorescente ;
puis à la fois la lumière laser et la lumière fluorescente atteignent le composant de fusion de lumière (5) pour être fusionnées ;
**caractérisée en ce que** la lumière laser et la lumière fluorescente sont transmises à travers le deuxième élément de diffusion (6) après avoir été fusionnées par le composant de fusion de lumière (5) et avant d'être délivrées à travers la roue à filtres de couleur (7), et
il est commandé au deuxième élément de diffusion (6) de tourner.

2. Source de lumière laser selon la revendication 1, dans laquelle la roue fluorescente (4), le deuxième élément de diffusion (6) et la roue à filtres de couleur (7) tournent de manière synchrone.

3. Source de lumière laser selon la revendication 1 ou 2, dans laquelle le premier élément de diffusion (3) est revêtu de diffuseurs dans une répartition uniforme.

4. Source de lumière laser selon la revendication 1 ou 3, dans laquelle le deuxième élément de diffusion (6) comprend une partie de diffusion (61) et une partie transparente (62), la partie de diffusion (61) est revêtue de diffuseurs, et la partie transparente (62) est constituée de matériaux à haute transmittance.

5. Source de lumière laser selon la revendication 4, dans laquelle le dispositif laser (1) est un dispositif laser monochromatique émettant une lumière laser bleue, le premier élément de diffusion (3) est utilisé pour transmettre la lumière laser bleue, et la partie de diffusion (61) du deuxième élément de diffusion (6) est utilisée pour transmettre la lumière laser bleue.

6. Source de lumière laser selon la revendication 4, dans laquelle le dispositif laser (1) est un dispositif laser bicolore comprenant un dispositif laser bleu et un dispositif laser rouge, et le premier élément de diffusion (3) est utilisé pour transmettre une lumière laser bleue et une lumière laser rouge.

7. Source de lumière laser selon la revendication 6, dans laquelle la partie de diffusion (61) du deuxième élément de diffusion (6) comprend une partie de diffusion de lumière laser bleue (611) utilisée pour transmettre la lumière laser bleue et une partie de diffusion de lumière laser rouge (612) utilisée pour transmettre la lumière laser rouge.

8. Source de lumière laser selon la revendication 7, dans laquelle la partie de diffusion de lumière laser rouge (612) comprend de multiples sous-parties de diffusion (612a, 612b ,612c), et les multiples sous-parties de diffusion (612a, 612b ,612c) ont différents angles de diffusion pour la lumière laser rouge.

9. Source de lumière laser selon la revendication 8, dans laquelle, parmi les multiples sous-parties de diffusion (612a, 612b ,612c), les angles de diffusion pour la lumière laser rouge des sous-parties de diffusion (612b) au milieu sont plus grands que les angles de diffusion pour la lumière laser rouge des sous-parties de diffusion (612a, 612c) des deux côtés.

10. Source de lumière laser selon la revendication 8 ou 9, dans laquelle, parmi les multiples sous-parties de diffusion (612a, 612b ,612c), les aires des sous-parties de diffusion au milieu (612b) sont plus grandes que les aires des sous-parties de diffusion (612a, 612c) des deux côtés.

11. Source de lumière laser selon la revendication 4, dans laquelle les diffuseurs sont des composants binaires ou en verre dépoli.

12. Source de lumière laser selon l'une quelconque des revendications 1 à 11, dans laquelle le premier élément de diffusion (3) est une plaque de diffusion, et/ou le deuxième élément de diffusion (6) est une plaque de diffusion.

13. Dispositif d'affichage de projection, comprenant une source de lumière laser (1), un appareil à lumière (2), une lentille (3) et un écran de projection (4), dans lequel la source de lumière laser (1) fournit un éclairage à l'appareil à lumière (2), et des images sont projetées sur l'écran de projection (4) par la lentille (3) pour leur affichage, et dans lequel la source de lumière laser (1) est n'importe quelle source de lumière laser selon l'une quelconque des revendications 1 à 11.
